# DEMANDE DE BREVET EUROPEEN

(11) **EP 0 679 839 A1**
(43) Date de publication de la demande: **02.11.1995**
(21) Numéro de dépôt: 95400940.3
(22) Date de dépôt: 26.04.1995
(51) Int. Cl.: F23D 14/04, F23D 14/58, F23D 14/66

(54) **Perfectionnements aux brûleurs à gaz**

(30) Priorité: 29.04.1994 FR 9405241
(71) Demandeur: CHAFFOTEAUX ET MAURY, F-78400 Chatou (FR)
(72) Inventeur: Oumghari, Rédouane, F-22000 Saint Brieuc (FR); Quere, Albert, F-22000 Saint Brieuc (FR)
(74) Mandataire: Burbaud, Eric

(57) **Abrégé**

L'invention concerne un brûleur à gaz comprenant au moins une chambre de répartition (1) qui est destinée à recevoir de l'air et un gaz combustible, et qui est partiellement délimitée par une paroi perforée (2) constituant une rampe de combustion.

Selon l'invention, ladite paroi perforée présente une densité de perforations supérieure à 30 %, et la chambre de répartition est également délimitée par une plaque de support (3) massive qui est réalisée en un matériau bon conducteur thermique et qui supporte la paroi perforée, cette plaque de support étant disposée sensiblement parallèlement à la paroi perforée, en contact jointif avec ladite paroi perforée, la plaque de support ayant une épaisseur supérieure à 8 mm.

## Description

L'invention est relative aux brûleurs à gaz, et plus particulièrement à ceux qui comprennent au moins une chambre de répartition qui est destinée à recevoir de l'air et un gaz combustible, et qui est partiellement délimitée par une paroi mince perforée ou grille constituant une rampe de combustion.

Un tel brûleur à gaz est divulgué par exemple dans le document FR-A-2 695 457.

Ces brûleurs sont destinés notamment à équiper des appareils de chauffage et de production d'eau chaude domestique fonctionnant au gaz, dont la puissance nominale n'excède pas 70 kW thermiques.

Dans les brûleurs à gaz de ce type, il est souhaitable de diminuer la température de la flamme qui se forme au-dessus de la paroi perforée. En effet, une température de flamme élevée entraîne une teneur relativement élevée en oxydes d'azote dans les gaz de combustion, ce qui est défavorable compte tenu de la toxicité des oxydes d'azote.

L'invention a notamment pour but de diminuer de façon stable la température de flamme sans pour autant rendre complexe ou renchérir notablement le brûleur à gaz.

A cet effet, selon l'invention, un brûleur à gaz du genre en question est essentiellement caractérisé en ce que la paroi perforée présente une densité de perforations supérieure à 30 %, et en ce que la chambre de répartition est également délimitée par une plaque de support massive qui est réalisée en un matériau bon conducteur thermique et qui supporte la paroi perforée, cette plaque de support étant disposée sensiblement parallèlement à la paroi perforée, en contact jointif avec ladite paroi perforée, la plaque de support ayant une épaisseur supérieure à 8 mm, par exemple comprise entre 8 et 15 mm.

Ainsi, la forte densité des perforations de la paroi perforée permet d'obtenir une faible puissance surfacique de combustion sur la rampe de combustion (de préférence inférieure à 250 W/cm²), ce qui tend à diminuer la température de ladite paroi perforée.

De plus, la forte densité des perforations permet une meilleur transparence de la paroi perforée au rayonnement thermique des flammes, d'où une diminution de la température de flamme, une grande partie du rayonnement thermique dirigé vers le brûleur étant ainsi collecté par la plaque de support.

Du fait qu'elle est massive, la plaque de support ne risque pas d'être détériorée par cet apport de chaleur, et du fait qu'elle est réalisée en un matériau bon conducteur thermique, la plaque de support dissipe facilement la chaleur qu'elle reçoit vers d'autres parties du brûleur.

Par ailleurs, la plaque de support massive collecte également la chaleur de la paroi perforée, tant par rayonnement que par conduction. Ceci limite l'échauffement de la paroi perforée, échauffement qui pourrait détériorer ladite paroi perforée du fait de sa minceur. De plus, ce refroidissement de la grille participe indirectement à la diminution de la température de flamme.

Il résulte de ces dispositions une teneur faible et stable en oxydes d'azote dans les gaz de combustion, et une bonne tenue mécanique de la paroi perforée et de l'ensemble du brûleur.

De plus, la forte densité des perforations tend à minimiser les pertes de charge, ce qui est également favorable pour un entraînement d'air optimal.

Dans des modes de réalisation préférés, on a recours en outre à l'une et/ou à l'autre des dispositions suivantes :
- la plaque de support est réalisée en aluminium ;
- la chambre de répartition est formée au moins partiellement par un évidement creusé dans la plaque de support ;
- chaque chambre de répartition comporte une pluralité de tubes venturis alimentés en gaz par autant d'injecteurs et débouchant dans ladite chambre de répartition, chaque tube venturi étant reçu avec étanchéité dans un alésage qui traverse la plaque de support sensiblement perpendiculairement à celle-ci ; la plaque de support assure ainsi à la fois la liaison mécanique et l'étanchéité entre les tubes venturis d'une part, et la paroi perforée d'autre part ; de plus, la plaque de support peut ainsi transmettre une partie de sa chaleur aux tubes venturis par conduction thermique, ce qui permet d'obtenir un certain préchauffage du mélange air-gaz dans les tubes venturis, d'où une meilleur inflammabilité du mélange et une plus grande stabilité du front de flamme au-dessus de la paroi perforée ;
- les alésages qui reçoivent les tubes venturis sont alignés selon une direction commune, et la paroi perforée présente des parties creusées vers la plaque de support entre les alésages ; cette disposition permet de compenser la non uniformité du champ de vitesse du mélange air-gaz dans l'espace de la chambre de répartition qui est situé entre deux tubes venturis, et évite le développement d'une flamme collée à la paroi perforée et susceptible de chauffer localement ladite paroi perforée ;
- les parties creusées ont une forme sensiblement cylindrique présentant un axe parallèle à la plaque de support et perpendiculaire à l'axe d'alignement des alésages de cette plaque de support ;
- les alésages où sont reçus les tubes venturis sont séparés les uns des autres par une faible distance selon leur direction d'alignement, et lesdits alésages présentent une largeur selon leur direction d'alignement qui est supérieure à deux fois ladite faible distance ;
- les tubes venturis présentent une surface intérieure qui est apte à capter les rayonnements thermiques ; les tubes venturis peuvent ainsi capter une partie du rayonnement thermique provenant de la flamme et de la paroi perforée, ce qui d'une part participe à la réduction du niveau de température de la paroi perforée et de la flamme, et d'autre part permet d'obtenir un préchauffage du mélange air-gaz dans les tubes venturis, préchauffage qui améliore l'inflammabilité du mélange et entraîne une meilleure stabilité du front de flamme au-dessus de la paroi perforée ;
- les tubes venturis sont réalisés en un matériau choisi dans le groupe comprenant l'acier inoxydable et l'acier aluminié ;
- plusieurs chambres de mélange sont juxtaposées, et la plaque de support est commune aux différentes chambres de mélange ;
- la paroi perforée est également commune aux différentes chambres de répartition ;
- la plaque de support présente une surface qui est disposée en regard de la paroi perforée et qui est traitée pour présenter un grand coefficient d'absorption des rayonnements thermiques.

D'autres caractéristiques et avantages de l'invention apparaîtront au cours de la description suivante de trois de ses formes de réalisation, données à titre d'exemples non limitatifs, en regard des dessins joints.

Sur les dessins :
- la figure 1 est une vue schématique partielle en perspective d'un brûleur à gaz selon l'invention,
- la figure 2 est une vue en coupe transversale de la plaque de support et de la paroi perforée d'une des rampes de combustion du brûleur de la figure 1,
- la figure 3 est une vue en coupe longitudinale partielle d'une rampe du brûleur de la figure 1,
- la figure 4 est une vue en coupe transversale de la plaque de support et des parois perforées d'une variante du brûleur de la figure 1, et
- la figure 5 est une vue similaire à la figure 4, pour une variante de la figure 4.

Sur les différentes figures, les mêmes références désignent des éléments identiques ou similaires.

Dans la description qui suit, les termes tels que "vertical", "horizontal", "haut" , "bas" sont donnés en référence à la position d'utilisation la plus courante du brûleur, mais ne sont pas limitatifs.

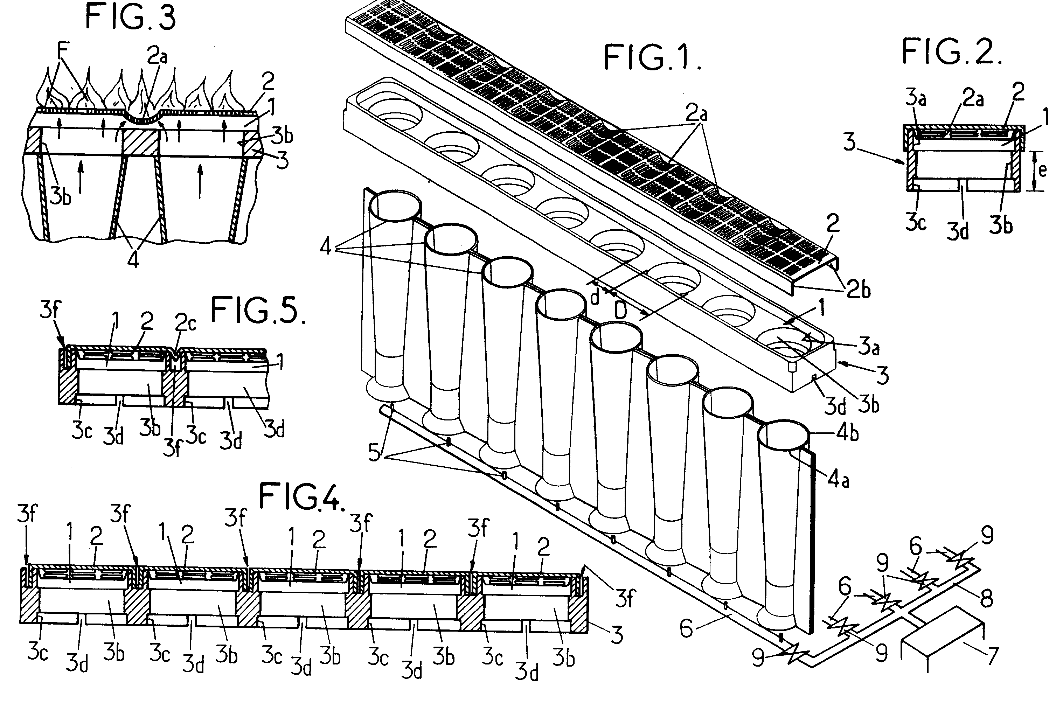

Le brûleur représenté sur les figures 1 à 3 est de type atmosphérique, et comporte cinq rampes de combustion juxtaposées, dont une seule est représentée.

Chaque rampe de combustion comprend :
- une pluralité de tubes venturis 4 s'étendant respectivement selon des axes verticaux situés dans un même plan vertical, chaque tube venturi comprenant, d'amont en aval, un court tronçon convergent, un col cylindrique, puis un long tronçon divergent,
- une nourrice 6 d'alimentation en gaz combustible, dotée d'autant d'injecteurs 5, chaque injecteur 5 étant orienté vers le haut et disposé selon l'axe d'un tube venturi 4, légèrement au-dessous de son tronçon convergent de façon à rendre possible l'admission d'air à ce niveau,
- une plaque de support 3 massive, réalisée en un matériau bon conducteur thermique tel que l'aluminium, cette plaque de support ayant une forme générale plane et étant orientée horizontalement, ladite plaque de support étant traversée par des alésages verticaux 3b qui sont en nombre égal aux tubes venturis 4 et qui comportent chacun une partie inférieure élargie 3c dans laquelle est emboîtée l'extrémité aval d'un tube venturi,
- une chambre de répartition 1 qui est définie dans un évidement 3a en partie supérieure de la plaque de support 3 et dans laquelle débouchent tous les tubes venturis, susmentionnés,
- et une paroi perforée 2 de faible épaisseur (par exemple quelques dixièmes de millimètres) au-dessus de laquelle a lieu la combustion du prémélange gazeux provenant de la chambre de répartition 1.

Les nourrices 6 du brûleur sont alimentées chacune à partir d'une source de gaz combustible sous pression 7, par l'intermédiaire de canalisations 8 et de vannes 9 propres à chaque nourrice. De préférence, chaque vanne 9 peut fonctionner en tout ou rien, comme divulgué par exemple dans le document FR-A-2 695 475 précité, afin que chaque rampe de combustion soit toujours alimentée avec un débit de gaz optimal.

La paroi perforée 2 peut être réalisée par exemple en acier inoxydable et présente de nombreuses perforations en forme de fentes rectilignes parallèles disposées perpendiculairement à la direction longitudinale de ladite paroi perforée.

Selon l'invention, ces fentes représentent une proportion de la surface supérieure de la paroi perforée 2 qui est supérieure à 30 %, et qui peut valoir par exemple environ 35 %. Ainsi, la paroi perforée 2 présente une bonne transparence au rayonnement thermique émis par les flammes F formées au-dessus d'elle, ce qui diminue la température des flammes.

Cette grande densité de perforations permet également une meilleure répartition de la nappe de flammes au-dessus de la plaque perforée, avec une puissance surfacique de préférence inférieure à 250 W/cm², ce qui contribue à diminuer la température de la paroi perforée. Par ailleurs, la grande densité des perforations est également favorable pour diminuer les pertes de charge dans l'écoulement gazeux.

La paroi perforée 2 présente latéralement deux rebords longitudinaux 2b rabattus verticalement vers la plaque de support 3. Ainsi, la paroi perforée 2 peut s'emboîter sur la plaque de support 3 en la chevauchant et la partie horizontale de la paroi 2 repose sur la face supérieure de la plaque de support 3 en périphérie de l'évidement 3a de cette plaque. Ce montage permet une étanchéité suffisante entre la paroi perforée 2 et la plaque de support 3.

De préférence, comme on peut le voir en particulier sur la figure 3, la paroi perforée 2 présente des parties embouties 2a qui sont creusées ou incurvées vers l'intérieur de la chambre de répartition 1 au-dessus de chaque portion de la plaque de support 3 qui sépare deux alésages 3a, 3b. Selon une forme de réalisation avantageuse, ces parties embouties peuvent présenter une forme cylindrique, éventuellement à section en arc de cercle ou en V, ayant un axe perpendiculaire au plan vertical commun aux axes verticaux des tubes venturis.

Cette disposition permet de compenser la non uniformité du champ de vitesse du prémélange gazeux sortant de la paroi perforée 2, et empêche que la nappe de flammes F reste collée à la paroi perforée 2 entre deux tubes venturis.

En effet, la vitesse du prémélange gazeux sortant de la paroi perforée 2 est plus faible entre les débouchés de deux tubes venturis 4, de sorte que, sans les parties embouties 2a, la nappe de flammes F aurait tendance à se former au contact de la paroi perforée 2 dans ces emplacements, voire à rentrer à l'intérieur de la chambre de répartition 1 avec certains types de gaz combustible.

La formation de flammes F au contact de la paroi perforée risque de provoquer des surchauffes locales de la paroi perforée 2, surchauffes qui peuvent entraîner la détérioration de la paroi perforée du fait de sa minceur.

De plus, si les flammes F ont tendance à se former à l'intérieur de la chambre de répartition 1, le fonctionnement du brûleur peut s'avérer dangereux.

La plaque de support 3 présente une épaisseur e, au-dessous de la chambre de répartition 1, en général supérieure à 8 mm, et comprise par exemple entre 8 et 15 mm. Cette plaque est donc suffisamment massive pour supporter sans dommage l'énergie thermique qu'elle reçoit par conduction de la paroi perforée 2, et par rayonnement des flammes et de la paroi perforée 2. En plus de ses fonctions de liaison mécanique et d'étanchéité entre les tubes venturis et la paroi perforée, cette plaque de support assure ainsi une fonction d'absorption et de diffusion thermique.

La plaque de support 3, peut être traitée, au moins dans la partie de sa surface qui est disposée en regard de la paroi perforée 2, pour qu'elle présente un bon coefficient d'absorption du rayonnement thermique. Par exemple, la surface de la plaque massive 3 peut être traitée de façon qu'elle présente une couleur sombre (notamment au moyen d'une peinture spéciale, au moyen d'une anodisation, ou au moyen d'une oxydation), et/ou de façon qu'elle présente une surface rugueuse.

Dans le but de collecter une partie suffisante du rayonnement thermique de la nappe de flamme et de la grille dans les tubes venturis 4, pour des raisons qui seront vues ci-après, il est avantageux que les alésages 3b de la plaque de support 3 occupent une proportion assez importante de la surface de la plaque de support. Par exemple, ces alésages 3b peuvent présenter un diamètre D sensiblement égal à la largeur de l'évidement 3a de la plaque de support et l'écartement d entre deux alésages 3b successifs de la plaque de support peut être par exemple inférieur à la moitié de ce diamètre D.

Les tubes venturis 4 peuvent être réalisés par exemple en acier inoxydable ou en acier aluminié, et ils absorbent par leur surface intérieure le rayonnement thermique provenant de la nappe de flamme située au-dessus de la paroi perforée 2, et provenant également de la paroi perforée elle-même.

De plus, les tubes venturis 4 reçoivent de la chaleur par conduction depuis la plaque de support 3.

La chaleur reçue par rayonnement ou par conduction par les tubes venturis 4 est transmise à l'écoulement d'air et de gaz combustible qui transite dans ces tubes venturis. Eventuellement, pour augmenter cet échange thermique avec l'écoulement gazeux, il est possible de réaliser des ailettes axiales (non représentées) à l'intérieur des tubes venturis.

On obtient ainsi un préchauffage du mélange d'air et de gaz combustible, ce qui permet d'obtenir une meilleure inflammabilité du mélange, d'où une plus grande stabilité du front de flamme au-dessus de la grille.

Comme on peut le voir sur la figure 1, les tubes venturis 4 peuvent être réalisés par assemblage de demi-coquilles 4a, 4b, en tôle emboutie, ces deux demi-coquilles étant assemblées de façon étanche l'une contre l'autre, notamment par sertissage ou soudure.

Lors du montage de la rampe de combustion, les parties supérieures des demi-coquilles 4a, 4b sont reçues dans une rainure 3d formée longitudinalement en partie inférieure de la plaque de support 3, et dans les parties élargies 3c des alésages 3b.

Comme représenté sur la figure 4, la plaque de support 3 peut éventuellement être commune aux différentes rampes de combustion du brûleur, de façon à former un ensemble monobloc. Dans ce cas, la plaque de support 3 peut comporter en partie supérieure des rainures longitudinales 3f qui reçoivent les bords longitudinaux rabattus des parois perforées 2. Cette disposition permet de diminuer le coût du brûleur et de simplifier sa réalisation, et facilite en outre la diffusion de la chaleur par la plaque de support commune 3, d'autant plus que toutes les rampes de combustion du brûleur ne sont pas forcément simultanément en fonctionnement.

Eventuellement, comme représenté sur la figure 5, la plaque de support 3 peut être similaire à celle de la figure 4 et être équipée d'une paroi perforée 2 également commune aux différentes rampes de combustion. Cette paroi perforée 2 peut éventuellement comporter des pliures longitudinales parallèles 2c qui pénètrent dans les rainures 3f de la plaque de support 3, pour réaliser une étanchéité suffisante entre les chambres de répartition 1 des différentes rampes de combustion.

L'utilisation d'une paroi perforée 2 commune est avantageuse dans la mesure où elle diminue le coût du brûleur et le simplifie. Cette disposition ne risque pas de perturber le bon fonctionnement du brûleur, par exemple par transmission de chaleur d'une partie à l'autre de la paroi perforée commune, dans la mesure où la plaque de support massive tend précisément à diminuer efficacement la température de cette paroi perforée.

Selon une autre variante, non représentée, la plaque de support 3 de chaque rampe de combustion, ou éventuellement un plaque monobloc commune à toutes les rampes de combustion, pourrait être raccordée avec étanchéité à la partie supérieure d'une chambre recevant un mélange d'air et de gaz combustible sous pression, le brûleur étant alors de type à air soufflé.

## Revendications

1. Brûleur à gaz comprenant au moins une chambre de répartition (1) qui est destinée à recevoir de l'air et un gaz combustible, et qui est partiellement délimitée par une paroi mince perforée (2) constituant une rampe de combustion,
caractérisé en ce que ladite paroi perforée présente une densité de perforations supérieure à 30 %,
et en ce que la chambre de répartition est également délimitée par une plaque de support (3) massive qui est réalisée en un matériau bon conducteur thermique et qui supporte la paroi perforée (2), cette plaque de support étant disposée sensiblement parallèlement à la paroi perforée, en contact jointif avec ladite paroi perforée, la plaque de support (3) ayant une épaisseur (e) supérieure à 8 mm.

2. Brûleur à gaz selon la revendication 1, dans lequel la plaque de support (3) est réalisée en aluminium.

3. Brûleur à gaz selon l'une quelconque des revendications 1 et 2, dans lequel la chambre de répartition 1 est formée au moins partiellement par un évidement (3a) creusé dans la plaque de support (3).

4. Brûleur à gaz selon l'une quelconque des revendications précédentes, comportant en outre, pour chaque chambre de répartition (1), une pluralité de tubes venturis (4) alimentés en gaz combustible par autant d'injecteurs (5) et débouchant dans ladite chambre de répartition, chaque tube venturi étant reçu avec étanchéité dans un alésage (3b) qui traverse la plaque de support sensiblement perpendiculairement à celle-ci.

5. Brûleur à gaz selon la revendication 4, dans lequel les alésages (3b) qui reçoivent les tubes venturis sont alignés selon une direction commune, et dans lequel la paroi perforée (2) présente des parties creusées (2a) vers la plaque de support (3) entre les alésages (3b).

6. Brûleur à gaz selon la revendication 5, dans lequel les parties creusées (2a) ont une forme sensiblement cylindrique présentant un axe parallèle à la plaque de support (3) et perpendiculaire à la direction d'alignement des alésages (3b) de cette plaque de support.

7. Brûleur à gaz selon l'une quelconque des revendications 5 et 6, dans lequel les alésages (3b) où sont reçus les tubes venturis sont séparés les uns des autres par une faible distance (d) selon leur direction d'alignement, et lesdits alésages présentent une largeur (D) selon leur direction d'alignement qui est supérieure à deux fois ladite faible distance (d).

8. Brûleur à gaz selon l'une quelconque des revendications 4 à 7, dans lequel les tubes venturis présentent une surface intérieure qui est apte à capter les rayonnements thermiques.

9. Brûleur à gaz selon la revendication 8, dans lequel les tubes venturis sont réalisés en un matériau choisi dans le groupe comprenant l'acier inoxydable et l'acier aluminié.

10. Brûleur à gaz selon l'une quelconque des revendications précédentes, comportant plusieurs chambres de répartition (1) juxtaposées, et dans lequel la plaque de support (3) est commune aux différentes chambres de répartition.

11. Brûleur à gaz selon la revendication 10, dans lequel la paroi perforée (2) est également commune aux différentes chambres de répartition (1).

12. Brûleur à gaz selon l'une quelconque des revendications précédentes, dans lequel la plaque de support (3) présente une surface (3a) qui est disposée en regard de la paroi perforée (2) et qui est traitée pour présenter un grand coefficient d'absorption des rayonnements thermiques.
